Europäisches Patentamt

European Patent Office

Office européen des brevets

(19)

(11) **EP 0 749 538 B1**

(12) **FASCICULE DE BREVET EUROPEEN**

(45) Date de publication et mention
de la délivrance du brevet:
**22.07.1998 Bulletin 1998/30**

(21) Numéro de dépôt: **95911353.1**

(22) Date de dépôt: **28.02.1995**

(51) Int Cl.6: **F16C 32/04**

(86) Numéro de dépôt international:
**PCT/FR95/00231**

(87) Numéro de publication internationale:
**WO 95/23297 (31.08.1995 Gazette 1995/37)**

(54) **PALIER MAGNETIQUE ACTIF A AUTO-DETECTION DE POSITION**

**AKTIVES MAGNETLAGER MIT POSITIONS-SELBSTERFASSUNG**

**ACTIVE MAGNETIC BEARING WITH AUTO POSITION-DETECTION**

(84) Etats contractants désignés:
**DE GB IT NL**

(30) Priorité: **28.02.1994 FR 9402236**

(43) Date de publication de la demande:
**27.12.1996 Bulletin 1996/52**

(73) Titulaire: **SOCIETE DE MECANIQUE
MAGNETIQUE
F-27950 Saint-Marcel (FR)**

(72) Inventeurs:
• **SCHROEDER, Ulrich
F-76130 Mont-Saint-Aignan (FR)**

• **BRUNET, Maurice
F-27950 Sainte-Colombe (FR)**

(74) Mandataire: **Thévenet, Jean-Bruno et al
Cabinet Beau de Loménie
158, rue de l'Université
75340 Paris Cédex 07 (FR)**

(56) Documents cités:
**EP-A- 0 473 232          WO-A-93/23683
DE-A- 2 656 469          DE-A- 3 937 687
FR-A- 2 322 294          US-A- 3 508 444**

EP 0 749 538 B1

## Description

La présente invention a pour objet un palier magnétique actif à auto-détection de position comprenant des premier et second électro-aimants antagonistes disposés de part et d'autre d'un corps ferromagnétique suspendu sans contact entre ces électro-aimants, les premier et second électro-aimants orientés selon un axe X'X comprenant chacun d'une part un circuit magnétique définissant avec ledit corps un entrefer $e_1$; $e_2$ dont la valeur moyenne est égale à une valeur commune prédéterminée $e_o$, et d'autre part une bobine d'excitation alimentée à partir d'un amplificateur de puissance dont le courant d'entrée est asservi en fonction de la position du corps par rapport aux circuits magnétiques des premier et second électro-aimants.

Dans les systèmes de palier magnétique actif les plus couramment utilisés, la position du corps suspendu, lequel corps peut être par exemple un rotor de machine ou un disque, est contrôlée en permanence à l'aide de détecteurs de position associés aux électro-aimants des paliers activateurs produisant les forces nécessaires pour le maintien du corps suspendu dans une position de travail donnée.

Le fait d'utiliser des détecteurs de position distincts des électro-aimants de support du corps suspendu renchérit considérablement le coût des machines, du fait des détecteurs proprement dits, de la connectique associée et des circuits électroniques pour les alimenter.

De plus, ces détecteurs ne peuvent être situés qu'à côté du palier, et de ce fait ne sont pas colinéaires en tant que point de détection par rapport au point de réaction. Cette délocalisation des détecteurs par rapport aux organes actuateurs peut induire des effets pervers quant au contrôle du rotor, lorsqu'il s'agit de prendre en compte les déformations du rotor induites lors de la rotation. Les détecteurs peuvent en effet se trouver alors à des noeuds de déformation alors que les électro-aimants activateurs seront plus proches de ventres de déformation, ou vice-versa. L'information fournie par les détecteurs ne sera alors pas le reflet fidèle de la réalité au niveau des paliers proprement dits.

On connaît encore, par le document WO-A-9323683 un système de palier magnétique à auto-détection comprenant, pour une direction donnée, des bobines connectées en série dans lesquelles circulent à la fois un courant destiné à stabiliser la position du corps mobile suspendu par le palier et un courant de détection. Un tel système de palier magnétique nécessite toutefois une pré-aimantation statorique réalisée avec des aimants permanents ainsi que des amplificateurs capables de fournir chacun des courants pouvant être à tour de rôle positifs et négatifs selon la position du corps mobile. La mise en oeuvre de moyens de pré-aimantation et d'amplificateurs linéaires complexes du type quatre quadrants rend la réalisation complexe et affecte la fiabilité de l'ensemble.

La présente invention vise à remédier aux divers inconvénients précités et à permettre d'assurer un asservissement fiable des électro-aimants d'un palier magnétique actif en fournissant de façon peu coûteuse une information de position de l'organe suspendu sans faire appel à des détecteurs de position séparés, tels que des détecteurs de type inductif, capacitif ou optique.

L'invention vise plus particulièrement à permettre d'effectuer, avec des paliers magnétiques actifs classiques utilisant, selon une direction donnée, uniquement deux électro-aimants en opposition produisant des forces d'attraction sur un corps mobile, une détection de position du type inductif sans qu'il soit nécessaire d'adjoindre au palier magnétique des bobines de détection distinctes des électro-aimants de palier eux-mêmes, ou des moyens de pré-aimantation.

L'invention vise à permettre la réalisation de paliers magnétiques actifs de relativement faible coût, en particulier pour des machines devant être produites en grande quantité, telles que par exemple des broches textiles, des broches d'usinage, des pompes à vide, des disques d'ordinateurs.

Ces buts sont atteints, conformément à l'invention, grâce à un palier magnétique actif à auto-détection de position comprenant des premier et second électro-aimants antagonistes disposés de part et d'autre d'un corps ferromagnétique suspendu sans contact entre ces électro-aimants, les premier et second électro-aimants orientés selon un axe XX comprenant chacun d'une part un circuit magnétique définissant avec ledit corps un entrefer dont la valeur moyenne est égale à une valeur commune prédéterminée $e_0$, et d'autre part une bobine d'excitation alimentée à partir d'un amplificateur de puissance dont le courant d'entrée est asservi en fonction de la position du corps par rapport aux circuits magnétiques des premier et second électro-aimants, caractérisé en ce que les amplificateurs de puissance sont constitués par des amplificateurs à commutation ; en ce que les bobines des premier et second électro-aimants constituent directement des détecteurs de position du type inductif ; en ce que des moyens sont prévus pour injecter simultanément à l'entrée des amplificateurs de puissance alimentant les bobines des premier et second électro-aimants antagonistes, en superposition au courant principal issu des circuits d'asservissement, un courant sinusoïdal $I_o \sin wt$ d'amplitude constante $I_o$, de pulsation $w$ et présentant une phase identique, le rapport entre la tension de détection fournie par un amplificateur à la pulsation $w$ et la tension destinée à fournir la force exercée par l'électro-aimant correspondant étant de l'ordre de 5 à 20 % et de préférence voisin de 10 %; et en ce qu'il comprend des circuits pour extraire l'information de position déterminant l'intensité du courant principal à appliquer par les circuits d'asservissement aux amplificateurs de puissance directement à partir des tensions $u_1$, $u_2$ aux bornes des bobines d'excitation, mesurées à la fréquence du courant sinusoïdal constituant une porteuse de pulsation $w$

Ainsi, conformément à l'invention, le palier magnétique, en plus de sa fonction palier proprement dite, est utilisé

EP 0 749 538 B1

aussi comme détecteur de position du type inductif, sans qu'il soit nécessaire d'adjoindre aucune bobine supplémentaire, la tension étant mesurée aux bornes de chaque bobine d'électro-aimant du palier dans des conditions pour lesquelles il y a quasi proportionnalité avec le déplacement du corps suspendu (rotor).

Le fait que le courant sinusoïdal d'amplitude $I_o$ constante et de pulsation fixe w soit injecté simultanément dans les deux électro-aimants antagonistes, avec une phase identique des deux côtés, évite de créer la moindre force de perturbation sur le rotor quand celui-ci est dans sa position nominale centrale, en particulier dans les cas où la fréquence du courant sinusoïdal constituant la porteuse devra être suffisamment basse pour limiter la consommation de tension fournie par l'amplificateur de puissance alimentant le palier.

Dans tous les cas, le palier magnétique actif est caractérisé en ce que la fréquence du courant sinusoïdal injecté de pulsation w est nettement supérieure à la bande passante désirée en boucle fermée des circuits d'asservissement.

La mise en oeuvre d'amplificateurs de puissance à commutation permet de limiter les pertes et d'alimenter les bobines de palier avec une puissance réactive très importante.

Avantageusement, les amplificateurs à commutation présentent une fréquence de commutation de l'ordre de plusieurs dizaines de kilohertz.

Selon une caractéristique importante de la présente invention, les tensions $u_1$, $u_2$ aux bornes des bobines d'excitation mesurées à la fréquence du courant sinusoïdal de pulsation w sont comparées en mesure différentielle dans un comparateur fournissant une tension u proportionnelle au déplacement du corps par rapport à sa position d'équilibre.

La mesure différentielle permet d'éliminer les deux termes constants de la forme $U_o = L_o I_o$ w, dûs à l'inductance $L_o$ des bobines d'électro-aimants relative à l'entrefer moyen $e_o$, et les termes constants $U_s I_o$ w dûs à l'inductance de fuite $L_s$ des bobines d'électro-aimants relative aux fuites magnétiques.

De façon plus particulière, les circuits d'extraction de l'information de position comprennent un filtre passe-bande centré sur la fréquence du courant sinusoïdal de pulsation w et présentant une demi-largeur adaptée à la bande passante désirée des circuits d'asservissement.

Les circuits d'extraction de l'information de position comprennent un démodulateur synchrone placé en sortie du filtre passe bande et piloté par la fréquence du courant sinusoïdal de pulsation w.

Les circuits d'extraction de l'information de position comprennent un filtre du deuxième ordre pour filtrer la fréquence correspondant à une pulsation 2w créée par la démodulation double alternance au sein du démodulateur synchrone.

Avantageusement, les fréquences de commutation des amplificateurs de puissance à commutation et la fréquence du courant sinusoïdal de pulsation w sont synchronisées. Ceci permet d'éviter les problèmes de bruit dûs aux battements de fréquences.

Les électro-aimants sont dimensionnés de telle façon que la force maximale demandée à ces électro-aimants est obtenue pour une induction magnétique située hors de la zone de saturation du matériau utilisé pour constituer les circuits magnétiques des électro-aimants.

Dès lors que le trajet dans les circuits magnétiques des électro-aimants de palier reste négligeable et reste quasiment constant quelle que soit la force demandée aux électro-aimants, la mesure de l'inductance des bobines des électro-aimants de palier peut bien rester inversement proportionnelle à l'entrefer.

Les circuits magnétiques des électro-aimants sont réalisés en un matériau à perméabilité peu variable en fonction de l'induction magnétique, en particulier dans la zone de fonctionnement des électro-aimants située loin des zones de saturation.

Les circuits d'asservissement alimentant les amplificateurs de puissance comprennent un comparateur entre le signal de position issu des circuits d'extraction de l'information de position et une valeur de consigne de position, et au moins des circuits comprenant un réseau correcteur de traitement de signal et un linéarisateur du courant de repos.

Les circuits d'asservissement peuvent en outre comprendre des boucles de régulation de flux interposées entre d'une part les circuits comprenant un réseau correcteur et un linéarisateur, et d'autre part des circuits additionneurs constituant lesdits moyens d'injection recevant ledit courant sinusoïdal $I_o$ sin wt de pulsation w.

Dans ce cas, à titre d'exemple, chaque boucle de régulation du flux comprend un filtre réjecteur centré sur une fréquence de pulsation w et recevant en entrée le signal de tension de sortie de l'amplificateur correspondant, un circuit de calcul de flux correspondant, un circuit de calcul de flux auquel sont appliqués d'une part le signal de sortie du filtre réjecteur correspondant et d'autre part le signal de sortie d'un régulateur de flux également appliqué sur une entrée du circuit additionneur correspondant et un circuit soustracteur qui soustrait au signal issu des circuits comprenant un réseau correcteur et un linéarisateur, le signal issu du circuit de calcul de flux correspondant et délivre un signal de sortie à l'entrée du circuit régulateur de flux correspondant.

Naturellement, l'invention couvre des paliers magnétiques actifs comprenant en particulier deux systèmes de palier magnétique actif du type défini ci-dessus orientés selon deux directions XX', YY' perpendiculaires entre elles.

D'autres caractéristiques et avantages de l'invention ressortiront de la description suivante de modes particuliers de réalisation de l'invention, donnés à titre d'exemples non limitatifs, en référence au dessin annexé sur lequel:

- la figure 1 est un schéma-bloc d'un système de palier magnétique actif selon l'invention incorporant un système de détection de position utilisant les électro-aimants de palier, et
- la figure 2 est une courbe montrant l'allure du signal de position délivré par le système de détection de position, en fonction des variations de l'entrefer des électro-aimants.

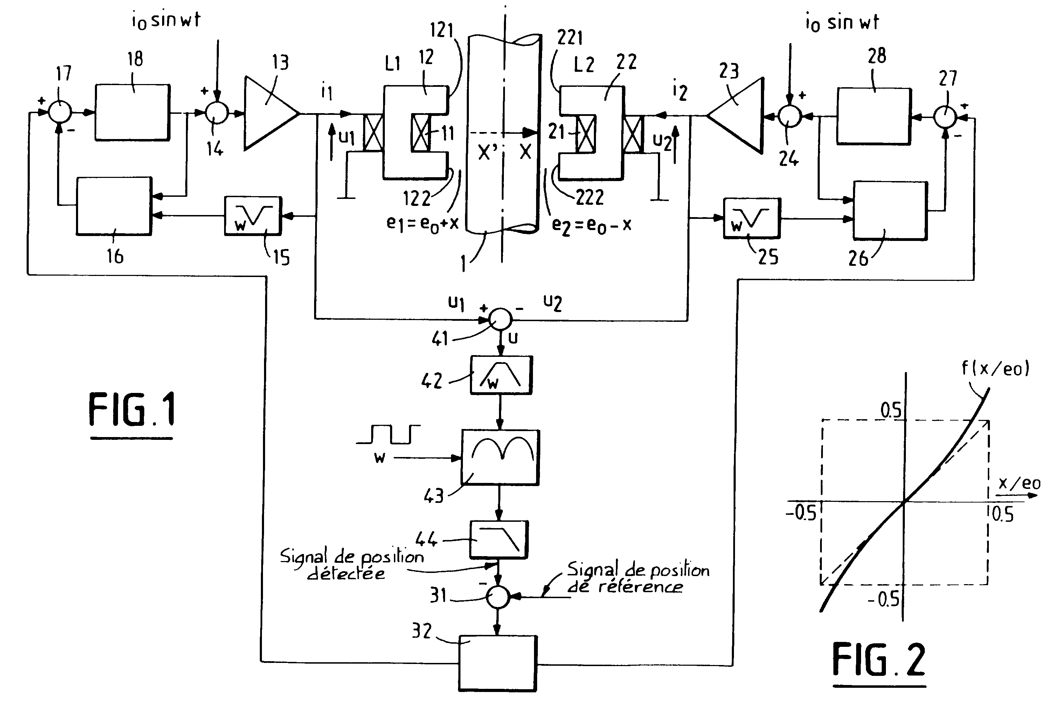

On voit sur la figure 1 un rotor 1 suspendu par deux électro-aimants de palier antagonistes orientés selon un axe XX' perpendiculaire à l'axe du rotor 1. Chaque électro-aimant comprend un circuit magnétique 12 resp. 22 en matériau ferromagnétique présentant en coupe la forme d'un U avec deux pièces polaires 121, 122 resp 221, 222 orientées vers le rotor 1, lui-même en matériau ferromagnétique ou revêtu d'une armature en matériau ferromagnétique. Les pièces polaires 121, 122 définissant chacune avec le rotor 1 un entrefer $e_1 = e_o + x$ où $e_o$ représente l'entrefer moyen lorsque le rotor est dans sa position d'équilibre et x représente la variation de l'entrefer par rapport à la valeur moyenne $e_o$, engendrée par un déplacement du rotor 1 dans la direction radiale XX. Les pièces polaires 221 et 222 sont symétriques des pièces polaires 121, 122 par rapport à l'axe du rotor 1 lorsque le rotor 1 est dans sa position d'équilibre, de sorte que les pièces polaires 221, 222 définissent chacune avec le rotor 1 un entrefer $e_2 = e_o - x$ où $e_o$ représente l'entrefer moyen lorsque le rotor 1 est dans sa position d'équilibre et x représente la variation de l'entrefer par rapport à la valeur moyenne $e_o$ engendrée par un déplacement du rotor 1 dans la direction radiale X'X. Ainsi, une valeur de x positive signifiera un déplacement du rotor 1 vers le circuit magnétique 22 tandis qu'une valeur de x négative signifiera un déplacement du rotor 1 vers le circuit magnétique 12.

Chaque électro-aimant comprend par ailleurs une bobine d'excitation 11 resp 21 qui est alimentée à partir d'un amplificateur de puissance 13 resp 23, qui est de préférence un amplificateur à commutation en mode courant. Chaque amplificateur de puissance 13 resp 23 reçoit en entrée un courant principal d'entrée qui permet de fournir en sortie aux bobines 11, 21 l'énergie nécessaire au maintien du rotor 1 dans sa position d'équilibre prédéterminée. Le courant principal d'entrée est issu de circuits d'asservissement ayant eux-mêmes reçu des informations sur la position réelle du rotor et prenant en compte une position de consigne. Chaque amplificateur 13 resp 23 délivre un courant unidirectionnel et indépendant du courant délivré par l'autre amplificateur 23 resp 13, les électro-aimants alimentés de façon indépendante par les amplificateurs 13, 23 étant montés en opposition et produisant des forces d'attraction sur le corps mobile 1 de part et d'autre de celui-ci selon l'axe XX.

Pour permettre d'obtenir une information de position sans utiliser de détecteur de position distinct des électro-aimants de palier, des circuits additionneurs 14, 24 permettent d'injecter simultanément à l'entrée des amplificateurs de puissance 13, 23, en superposition au courant principal issu des circuits d'asservissement, un courant sinusoïdal de la forme $I_o \sin wt$ d'amplitude constante $I_o$, de pulsation w et présentant une phase identique.

En sortie des amplificateurs de puissance 13, 23, il est donc injecté, en superposition au courant destiné à fournir la force portante des électro-aimants, des courants $i_1$, $i_2$ de la forme : $i_1 = i_2 = I_o \sin wt$.

Les entrefers $e_1$ et $e_2$ entre le rotor 1 et les pôles 121, 122 resp 221, 222 sont de la forme indiquée plus haut, à savoir :

$$e_1 = e_o + x$$

$$e_2 = e_o - x$$

Les inductances des électro-aimants 11, 12 resp 21, 22 sont respectivement de la forme :

$$L_1 = L_s + L_o / (1 + x/e_o)$$

$$L_2 = L_s + L_o/(1 - x/e_o)$$

où $L_s$ représente l'inductance de fuite des électro-aimants 11, 12 resp 21, 22 relative aux fuites magnétiques, et $L_o$ représente l'inductance des électro-aimants 11, 12 resp 21, 22 relative à l'entrefer moyen $e_o$.

Les tensions $u_1$ et $u_2$ aux bornes d'entrée des bobines 11 et 21, dues aux courants injectés $i_1$ et $i_2$, sont de la forme :

$$u_1 = - w I_o L_1 \cos wt$$

$$u_2 = - w \, I_o \, L_2 \cos wt$$

Lorsque l'on effectue dans un comparateur 41 la différence des tensions $u_1$ et $u_2$, on obtient des expressions de la forme :

$$u = u_1 - u_2 = -w I_o \cos wt \, (L_1 - L_2)$$

$$= (w I_o \cos wt).2 \, L_o.(x/e_o)/ \, (1-(x/e_o)^2)$$

$$= A.f \, (x/e_o)$$

où $A = (w I_o \cos wt) \, 2 \, L_o =$ constante
et $f \, (x/e_o) = (x/e_o)/(1-(x/e_o)^2)$

On voit que la comparaison en mesure différentielle des tensions $u_1$ et $u_2$ permet d'éliminer les termes constants dûs à l'inductance $L_o$ relative à l'entrefer moyen $e_o$ et à l'inductance de fuite $L_s$ relative aux fuites magnétiques de sorte que la tension résultante est proportionnelle au déplacement x du rotor 1.

La tension u est filtrée dans un filtre passe-bande 42 centré sur une fréquence correspondant à la pulsation w, et présentant une demi-largeur adaptée à la bande passante désirée de l'asservissement du système à paliers magnétiques.

La tension u est ensuite démodulée dans un démodulateur 43 synchrone piloté par une fréquence correspondant à la pulsation w.

La sortie du démodulateur synchrone 43 fournit, après passage dans un filtre du deuxième ordre 44 assurant le filtrage de la fréquence créée par la démodulation double alternance, un signal représentatif de la position réelle du rotor selon l'axe XX, au niveau des électro-aimants de palier.

Ce signal est de la forme :

$$u \, (x) = k \, (x/e_o)/ \, (1 - (x/e_o)^2)$$

La figure 2 montre la linéarité du signal de position u (x) obtenu, en fonction du rapport $x/e_o$ entre le déplacement du rotor x et l'entrefer moyen $e_o$.

On constate que cette linéarité est très bonne pour la plage de travail habituelle du palier.

On peut ainsi déduire un signal de position du rotor à partir de la mesure de l'inductance de deux électro-aimants antagonistes de palier, sans adjoindre de détecteur distinct des électro-aimants de palier et sans créer la moindre force de perturbation sur le rotor quand celui-ci est dans sa position nominale centrale, dès lors que le courant injecté de la forme $I_o \sin wt$ est injecté simultanément dans les deux électro-aimants antagonistes, avec une phase identique des deux côtés, ce qui permet notamment une comparaison en mesure différentielle.

Les courants de repos variables injectés dans les amplificateurs représentent une faible valeur par rapport aux courants d'asservissement destinés à fournir la force exercée par les électro-aimants, et les pertes rotoriques correspondantes peuvent rester extrêmement faibles.

La fréquence du courant sinusoïdal injecté, correspondant à la pulsation w est nettement supérieure à la bande passante en boucle fermée du système, mais doit de préférence rester suffisamment basse pour limiter la consommation de tension fournie par les amplificateurs de puissance alimentant le palier.

Comme cela a déjà été indiqué plus haut, les amplificateurs 13, 23 sont constitués avantageusement par des amplificateurs à commutation, de type connu en soi, pour limiter les pertes. Ces amplificateurs à commutation peuvent présenter une fréquence de commutation qui peut être de l'ordre de par exemple 50 kHz ou même être supérieure à cette valeur et peut égaler ou dépasser 100 kHz. Toutefois, il est préférable de synchroniser les fréquences de commutation des amplificateurs 13, 23 et la fréquence de la porteuse injectée de pulsation w afin d'éviter les problèmes de bruit dûs aux battements de fréquence.

A titre d'exemple, la fréquence de commutation peut être de l'ordre de vingt fois la fréquence de détection correspondant à la pulsation w, et la fréquence de détection peut elle-même être de l'ordre de vingt fois la fréquence d'asservissement.

D'une manière générale, le palier est dimensionné de telle sorte que la force maximale demandée au palier est obtenue pour une induction située hors de la zone de saturation du matériau utilisé pour le palier, et les circuits magnétiques 12, 22 du palier sont réalisés en matériau à perméabilité peu variable en fonction de l'induction magnétique, en particulier dans la zone de fonctionnement de l'électro-aimant, c'est-à-dire de sa zone de saturation.

On notera que le système de palier magnétique actif à auto-détection n'implique aucune pré-aimantation par aimants permanents, ce qui simplifie la réalisation et accroît la robustesse et la fiabilité.

Le signal de position issu du filtre 44 peut ensuite être utilisé dans des circuits d'asservissement de façon traditionnelle, comme si ce signal avait été obtenu par un détecteur indépendant, mais avec la garantie que l'information correspond exactement à la localisation des électro-aimants de palier.

Le signal de position peut ainsi être comparé dans un comparateur 31 avec une valeur de consigne de position et le signal issu du comparateur 31 est appliqué à de circuits 32 pouvant comprendre un réseau correcteur de traitement du signal, par exemple de type PID (proportionnel-Integral-Dérivé) et un linéarisateur de courant de repos. Le signal issu des circuits 32 peut ensuite être appliqué, avec des signes différents, sur une des entrées de chacun des circuits additionneurs 14, 24 placés à l'entrée des amplificateurs 13,23.

Avantageusement, les circuits d'asservissement peuvent comprendre en outre des boucles de régulation de flux interposés entre d'une part les circuits 32 et d'autre part les circuits additionneurs 14, 24.

Chaque boucle de régulation de flux peut comprendre un filtre réjecteur 15; 25 centré sur une fréquence de pulsation w et recevant en entrée le signal de tension de sortie de l'amplificateur correspondant 13; 23, un circuit de calcul de flux 16; 26 auquel sont appliqués d'une part le signal de sortie du filtre réjecteur correspondant 15; 25 et d'autre part le signal de sortie d'un régulateur de flux 18; 28 également appliqué sur une entrée du circuit additionneur correspondant 14; 24 et un circuit soustracteur 17; 27 qui soustrait au signal issu des circuits 32, le signal issu du circuit de calcul de flux correspondant 16; 26 et délivre un signal de sortie à l'entrée du circuit régulateur de flux correspondant 18; 28.

L'utilisation d'une boucle de flux en exploitant les tensions de sortie des amplificateurs, c'est-à-dire le signal également utilisé pour la détection, assure un meilleur comportement dynamique, même avec une bande passante du système de détection de position réduite.

Naturellement, il est possible d'incorporer, par exemple dans un palier magnétique actif radial, deux systèmes de palier magnétique actif selon l'invention comportant chacun une paire d'électro-aimants antagonistes, les deux paires d'électro-aimants étant orientées selon deux directions XX', YY' perpendiculaires entre elles.

Le palier magnétique actif selon l'invention peut aussi être utilisé seul, par exemple en tant que palier axial coopérant avec les deux faces d'un disque. Dans ce cas, les électro-aimants subissent une rotation de 90° par rapport au cas de la figure 1, les pièces polaires 121, 122, 221, 222 devenant parallèles à l'axe du disque.

## Revendications

1. Palier magnétique actif à auto-détection de position comprenant des premier et second électro-aimants antagonistes disposés de part et d'autre d'un corps ferromagnétique (1) suspendu sans contact entre ces électro-aimants, les premier et second électro-aimants orientés selon un axe X'X comprenant chacun d'une part un circuit magnétique (12; 22) définissant avec ledit corps un entrefer ($e_1$; $e_2$) dont la valeur moyenne est égale à une valeur commune prédéterminée $e_o$, et d'autre part une bobine d'excitation (11; 21) alimentée à partir d'un amplificateur de puissance (13; 23) dont le courant d'entrée est asservi en fonction de la position du corps (1) par rapport aux circuits magnétiques (12; 22) des premier et second électro-aimants, caractérisé en ce que les amplificateurs de puissance (13, 23) sont constitués par des amplificateurs à commutation ; en ce que les bobines (11; 21) des premier et second électro-aimants constituent directement des détecteurs de position du type inductif ; en ce que des moyens (14; 24) sont prévus pour injecter simultanément à l'entrée des amplificateurs de puissance (13; 23) alimentant les bobines (11; 21) des premier et second électro-aimants antagonistes, en superposition au courant principal issu des circuits d'asservissement (31, 32), un courant sinusoïdal $I_o$ sin wt d'amplitude constante $I_o$, de pulsation w et présentant une phase identique, le rapport entre la tension de détection fournie par l'amplificateur (13, 23) à la pulsation w et la tension destinée à fournir la force exercée par l'électro-aimant correspondant étant de l'ordre de 5 à 20 % et de préférence voisin de 10 %; et en ce qu'il comprend des circuits (41 à 44) pour extraire l'information de position déterminant l'intensité du courant principal à appliquer par les circuits d'asservissement (31, 32) aux amplificateurs de puissance (13, 23) directement à partir des tensions $u_1$, $u_2$ aux bornes des bobines d'excitation (11; 21), mesurées à la fréquence du courant sinusoïdal constituant une porteuse de pulsation w.

2. Palier magnétique actif selon la revendication 1, caractérisé en ce que la fréquence du courant sinusoïdal injecté de pulsation w est nettement supérieure à la bande passante désirée en boucle fermée des circuits d'asservissement.

3. Palier magnétique actif selon la revendication 1 ou la revendication 2, caractérisé en ce que les amplificateurs à commutation (13, 23) présentent une fréquence de commutation de l'ordre de plusieurs dizaines de kilohertz.

4. Palier magnétique actif selon l'une quelconque des revendications 1 à 3, caractérisé en ce que les fréquences de commutation des amplificateurs de puissance à commutation (13, 23) et la fréquence du courant sinusoïdal de pulsation w sont synchronisées.

5. Palier magnétique actif selon l'une quelconque des revendications 1 à 4, caractérisé en ce que les tensions $u_1$, $u_2$ aux bornes des bobines d'excitation (11, 21) mesurées à la fréquence du courant sinusoïdal de pulsation w sont comparées en mesure différentielle dans un comparateur (41) fournissant une tension u proportionnelle au déplacement du corps (1) par rapport à sa position d'équilibre.

6. Palier magnétique actif selon l'une quelconque des revendications 1 à 5, caractérisé en ce que les circuits (41 à 44) d'extraction de l'information de position comprennent un filtre passe-bande (42) centré sur la fréquence du courant sinusoïdal de pulsation w et présentant une demi-largeur adaptée à la bande passante désirée des circuits d'asservissement (31, 32).

7. Palier magnétique actif selon la revendication 6, caractérisé en ce que les circuits (41 à 44) d'extraction de l'information de position comprennent un démodulateur synchrone (43) placé en sortie du filtre passe bande (42) et piloté par la fréquence du courant sinusoïdal de pulsation w.

8. Palier magnétique selon la revendication 7, caractérisé en ce que les circuits (41 à 44) d'extraction de l'information de position comprennent un filtre du deuxième ordre (44) pour filtrer la fréquence correspondant à une pulsation 2w créée par la démodulation double alternance au sein du démodulateur synchrone (43).

9. Palier magnétique actif selon l'une quelconque des revendications 1 à 8, caractérisé en ce que les électro-aimants sont dimensionnés de telle façon que la force maximale demandée à ces électro-aimants est obtenue pour une induction magnétique située hors de la zone de saturation du matériau utilisé pour constituer les circuits magnétiques (12; 22) des électro-aimants.

10. Palier magnétique actif selon la revendication 9, caractérisé en ce que les circuits magnétiques (12; 22) des électro-aimants sont réalisés en un matériau à perméabilité peu variable en fonction de l'induction magnétique, en particulier dans la zone de fonctionnement des électro-aimants située loin des zones de saturation.

11. Palier magnétique actif selon l'une quelconque des revendications 1 à 10, caractérisé en ce que les circuits d'asservissement (31, 32) alimentant les amplificateurs de puissance (13; 23) comprennent un comparateur (31) entre le signal de position issu des circuits (41 à 44) d'extraction de l'information de position et une valeur de consigne de position, et au moins des circuits (32) comprenant un réseau correcteur de traitement de signal et un linéarisateur du courant de repos.

12. Palier magnétique actif selon la revendication 11, caractérisé en ce que les circuits d'asservissement comprennent en outre des boucles de régulation de flux interposées entre d'une part les circuits (32) comprenant un réseau correcteur et un linéarisateur, et d'autre part des circuits additionneurs (14, 24) constituant lesdits moyens d'injection recevant ledit courant sinusoïdal $I_o$ sin wt de pulsation w.

13. Palier magnétique actif selon la revendication 12, caractérisé en ce que chaque boucle de régulation du flux comprend un filtre réjecteur (15; 25) centré sur une fréquence de pulsation w et recevant en entrée le signal de tension de sortie de l'amplificateur correspondant (13; 23), un circuit de calcul de flux (16; 26) auquel sont appliqués d'une part le signal de sortie du filtre réjecteur correspondant (15; 25) et d'autre part le signal de sortie d'un régulateur de flux (18; 28) également appliqué sur une entrée du circuit additionneur correspondant (14; 24) et un circuit soustracteur (17; 27) qui soustrait au signal issu des circuits (32) comprenant un réseau correcteur et un linéarisateur, le signal issu du circuit de calcul de flux correspondant (16; 26) et délivre un signal de sortie à l'entrée du circuit régulateur de flux correspondant (18; 28).

14. Palier magnétique actif comprenant deux systèmes de palier magnétique actif selon l'une quelconque des revendications 1 à 13, orientés selon deux directions XX', YY' perpendiculaires entre elles.

**Patentansprüche**

1. Aktives Magnetlager mit Positions-Selbsterfassunq, das erste und zweite, gegenmagnetisierte Elektromagneten aufweist, die zu beiden Seiten eines ferromagnetischen Körpers (1) angeordnet sind, der ohne Kontakt zwischen diesen Elektromagneten aufgehängt ist, wobei der erste und der zweite Elektromagnet, die gemäß einer Achse X'X ausgerichtet sind, je einerseits einen Magnetkreis (12; 22), der mit dem Körper einen Luftspalt ($e_1$; $e_2$) bildet, dessen Mittelwert gleich einem vorbestimmten gemeinsamen Wert $e_0$ ist, und andererseits eine Magnetspule (11; 21) aufweisen, die von einem Leistungsverstärker (13; 23) gespeist wird, dessen Eingangsstrom in Abhängigkeit von der Position des Körpers (1) in Bezug auf die Magnetkreise (12; 22) des ersten und zweiten Elektromagneten geregelt ist,
dadurch gekennzeichnet, daß die Leistungsverstärker (13, 23) aus Umschalt-Verstärkern bestehen, daß die Spulen (11; 21) des ersten und des zweiten Elektromagneten direkt induktive Positionsdetektoren bilden; daß Mittel (14; 24) vorgesehen sind, um gleichzeitig am Eingang der die Spulen (11; 21) der ersten und zweiten, gegenmagnetisierten Elektromagneten speisenden Leistungsverstärker (13; 23) in Überlagerung des von den Regelkreisen (31, 32) kommenden Hauptstroms einen sinusförmigen Strom $I_0 \sin wt$ einer konstanten Amplitude $I_0$, einer Kreisfrequenz w und identischer Phase einzuspeisen, wobei das Verhältnis zwischen der vom Verstärker (13, 23) gelieferten Erfassungsspannung einer Kreisfrequenz w und der Spannung, die die vom entsprechenden Elektromagneten ausgeübte Kraft liefert, zwischen 5 und 20% und vorzugsweise nahe 10% liegt, und daß es Schaltungen (41 bis 44) aufweist, um die Positionsinformation, die die Stärke des Hauptstroms bestimmt, der von den Regelkreisen (31, 32) an die Leistungsverstärker (13, 23) angelegt werden soll, direkt ausgehend von den Spannungen $u_1$, $u_2$ an den Klemmen der Magnetspulen (11; 21) zu entnehmen, die mit der Frequenz des sinusförmigen Stroms gemessen werden, die eine Trägerfrequenz der Kreisfrequenz w bildet.

2. Aktives Magnetlager nach Anspruch 1, dadurch gekennzeichnet, daß die Frequenz des eingespeisten sinusförmigen Stroms einer Kreisfrequenz w wesentlich höher ist als der gewünschte Durchlaßbereich in der geschlossenen Schleife der Regelkreise.

3. Aktives Magnetlager nach Anspruch 1 oder Anspruch 2, dadurch gekennzeichnet, daß die Umschalt-Verstärker (13, 23) eine Umschaltfrequenz von mehreren zehn Kilohertz aufweisen.

4. Aktives Magnetlager nach einem beliebigen der Ansprüche 1 bis 3, dadurch gekennzeichnet, daß die Umschaltfrequenzen der Umschalt-Leistungsverstärker (13, 23) und die Frequenz des sinusförmigen Stroms einer Kreisfrequenz w synchronisiert werden.

5. Aktives Magnetlager nach einem beliebigen der Ansprüche 1 bis 4, dadurch gekennzeichnet, daß die Spannungen $u_1$, $u_2$ an den Klemmen der Magnetspulen (11, 21), die mit der Frequenz des sinusförmigen Stroms einer Kreisfrequenz w gemessen werden, in Differential-Messung in einem Komparator (41) verglichen werden, der eine Spannung u proportional zur Verschiebung des Körpers (1) in Bezug auf seine Gleichgewichtsstellung liefert.

6. Aktives Magnetlager nach einem beliebigen der Ansprüche 1 bis 5, dadurch gekennzeichnet, daß die Schaltungen (41 bis 44) für die Entnahme der Positionsinformation ein Bandfilter (42) aufweisen, das auf die Frequenz des sinusförmigen Stroms einer Kreisfrequenz w zentriert ist und eine Halbbreite aufweist, die an den gewünschte Durchlaßbereich der Regelkreise (31, 32) angepaßt ist.

7. Aktives Maqnetlager nach Anspruch 6, dadurch gekennzeichnet, daß die Schaltungen (41 bis 44) zur Entnahme der Positionsinformation einen synchronen Demodulator (43) aufweisen, der am Ausgang des Bandfilters (42) angeordnet ist und von der Frequenz des sinusförmigen Stroms einer Kreisfrequenz w gesteuert wird.

8. Aktives Magnetlager nach Anspruch 7, dadurch gekennzeichnet, daß die Schaltungen (41 bis 44) zur Entnahme der Positionsinformation ein Filter der zweiten Ordnung (44) aufweisen, um die Frequenz zu filtern, die einer Kreisfrequenz 2w entspricht, welche von der Vollweg-Demodulation innerhalb des synchronen Demodulators (43) erzeugt wird.

9. Aktives Magnetlager nach einem beliebigen der Ansprüche 1 bis 8, dadurch gekennzeichnet, daß die Elektromagneten so bemessen sind, daß die höchste von diesen Elektromagneten geforderte Kraft für eine magnetische Induktion erhalten wird, die außerhalb der Sättigungszone des Materials liegt, das zur Bildung der Schaltkreise (12; 22) der Elektromagneten verwendet wird.

**EP 0 749 538 B1**

10. Aktives Magnetlager nach Anspruch 9, dadurch gekennzeichnet, daß die Magnetkreise (12; 22) der Elektromagneten aus einem Material bestehen, das in Abhängigkeit von der magnetischen Induktion eine wenig variable Permeabilität hat, insbesondere in der Betriebszone der Elektromagneten, die sich weit von den Sättigungszonen entfernt befindet.

11. Aktives Magnetlager nach einem beliebigen der Ansprüche 1 bis 10, dadurch gekennzeichnet, daß die Regelkreise (31, 32), die die Leistungsverstärker (13; 23) speisen, einen Komparator (31) für den Vergleich zwischen dem Positionssignal, das von den Schaltungen (41 bis 44) zur Entnahme der Positionsinformation kommt, und einem Positions-Sollwert, und mindestens Schaltungen (32) aufweisen, die eine Signalverarbeitungs-Korrektorschaltung und eine Linearisierungsschaltung des Ruhestroms enthalten.

12. Aktives Magnetlager nach Anspruch 11, dadurch gekennzeichnet, daß die Regelkreise weiter Fluß-Regelschleifen aufweisen, die zwischen die eine Korrektorschaltung und eine Linearisierungsschaltung enthaltenden Schaltungen (32) einerseits und Additionschaltungen (14, 24) andererseits zwischengeschoben sind, die die Einspeisemittel bilden, welche den sinusförmigen Strom $I_0$ sin wt einer Kreisfrequenz w empfangen.

13. Aktives Magnetlager nach Anspruch 12, dadurch gekennzeichnet, daß jede Fluß-Regelschleife ein Sperrkreis-Filter (15; 25), das auf eine Frequenz einer Kreisfrequenz w zentriert ist und am Eingang das Ausgangs-Spannungssignal des entsprechenden Verstärkers (13; 23) empfängt, eine Fluß-Berechnungsschaltung (16; 26), an die einerseits das Ausgangssignal des entsprechenden Sperrkreis-Filters (15; 25) und andererseits das Ausgangssignal eines Fluß-Reglers (18; 28) angelegt werden, das auch an einen Eingang der entsprechenden Additionsschaltung (14; 24) angelegt wird, und eine Subtrahierschaltung (17; 27) enthält, die vom von den eine Korrektorschaltung und eine Linearisierungsschaltung enthaltenden Schaltungen (32) kommenden Signal das Signal subtrahiert, das von der entsprechenden Fluß-Berechnungsschaltung (16; 26) kommt, und ein Ausgangssignal an den Eingang der entsprechenden Fluß-Regelschaltung (18; 28) liefert.

14. Aktives Magnetlager, das zwei Systeme von aktiven Magnetlagern gemäß einem beliebigen der Ansprüche 1 bis 13 enthält, die gemäß zwei Richtungen XX', YY' ausgerichtet sind, die zueinander senkrecht liegen.

## Claims

1. Active magnetic bearing with auto position-detection comprising first and second antagonistic electromagnets arranged either side of a ferromagnetic body (1) suspended without contact between these electromagnets, the first and second electromagnets oriented along an axis X'X each comprising on the one hand a magnetic circuit (12; 22) defining with the said body a gap ($e_1$; $e_2$) whose mean value is equal to a predetermined common value $e_0$, and on the other hand an excitation coil (11; 21) fed from a power amplifier (13; 23) whose input current is servocontrolled as a function of the position of the body (1) with respect to the magnetic circuits (12; 22) of the first and second electromagnets, characterized in that the power amplifiers (13; 23) consist of switching amplifiers; in that the coils (11; 21) of the first and second electromagnets directly constitute position sensors of the inductive type; in that means (14; 24) are provided for simultaneously injecting into the input of the power amplifiers (13; 23) feeding the coils (11; 21) of the first and second antagonistic electromagnets, superimposed on the main current from the servocontrol circuits (31, 32), a sinusoidal current $I_0$ sin wt of constant amplitude $I_0$ and of angular frequency w and exhibiting an identical phase, the ratio between the sensing voltage delivered by the amplifier (13, 23) at the angular frequency w and the voltage intended to yield the force exerted by the corresponding electromagnet being of the order of 5 to 20% and preferably close to 10%; and that it comprises circuits (41 to 44) for extracting the position information which determines the intensity of the main current to be applied by the servocontrol circuits (31, 32) to the power amplifiers (13, 23) directly on the basis of the voltages $u_1$, $u_2$ at the terminals of the excitation coils (11; 21), measured at the frequency of the sinusoidal current constituting a carrier of angular frequency w.

2. Active magnetic bearing according to Claim 1, characterized in that the frequency of the injected sinusoidal current of angular frequency w is markedly greater than the desired close-loop passband of the servocontrol circuits.

3. Active magnetic bearing according to Claim 1 or Claim 2, characterized in that the switching amplifiers (13, 23) exhibit a switching frequency of the order of several tens of kilohertz.

4. Active magnetic bearing according to any one of Claims 1 to 3, characterized in that the switching frequencies of

9

the switching power amplifiers (13, 23) and the frequency of the sinusoidal current of angular frequency w are synchronized.

5. Active magnetic bearing according to any one of Claims 1 to 4, characterized in that the voltages $u_1$, $u_2$ at the terminals of the excitation coils (11, 21) measured at the frequency of the sinusoidal current of angular frequency w are compared by differential measurement in a comparator (41) yielding a voltage u proportional to the displacement of the body (1) with respect to its equilibrium position.

6. Active magnetic bearing according to any one of Claims 1 to 5, characterized in that the circuits (41 to 44) for extracting the position information comprise a band-pass filter (42) centred on the frequency of the sinusoidal current of angular frequency w and exhibiting a half-width adapted to the desired passband of the servocontrol circuits (31, 32).

7. Active magnetic bearing according to Claim 6, characterized in that the circuits (41 to 44) for extracting the position information comprise a synchronous demodulator (43) placed at the output of the band-pass filter (42) and driven by the frequency of the sinusoidal current of angular frequency w.

8. Magnetic bearing according to Claim 7, characterized in that the circuits (41 to 44) for extracting the position information comprise a second-order filter (44) for filtering the frequency corresponding to an angular frequency 2w created by the full wave demodulation within the synchronous demodulator (43).

9. Active magnetic bearing according to any one of Claims 1 to 8, characterized in that the electromagnets are dimensioned in such a way that the maximum force demanded of these electromagnets is obtained for a magnetic induction lying outside the saturation region of the material used to make the magnetic circuits (12 ; 22) of the electromagnets.

10. Active magnetic bearing according to Claim 9, characterized in that the magnetic circuits (12 ; 22) of the electromagnets are made from a material whose permeability hardly varies as a function of magnetic induction, especially within the region of operation of the electromagnets which lie a long way from the saturation regions.

11. Active magnetic bearing according to any one of Claims 1 to 10, characterized in that the servocontrol circuits (31, 32) feeding the power amplifiers (13 ; 23) comprise a comparator (31) making a comparison between the position signal from the circuits (41 to 44) for extracting position information and a position set value, and at least circuits (32) comprising a signal processing corrector network and a linearizer of the quiescent current.

12. Active magnetic bearing according to Claim 11, characterized in that the servocontrol circuits additionally comprise flux regulation loops interposed between on the one hand the circuits (32) comprising a corrector network and a linearizer, and on the other hand adder circuits (14, 24) which constitute the said injection means which receive the said sinusoidal current $I_0$ sin wt of angular frequency w.

13. Active magnetic bearing according to Claim 12, characterized in that each flux regulation loop comprises a rejector filter (15 ; 25) centred on a frequency of angular frequency w and receiving as input the voltage signal output by the corresponding amplifier (13 ; 23), a flux calculation circuit (16 ; 26) to which are applied on the one hand the output signal from the corresponding rejector filter (15 ; 25) and on the other hand the output signal from a flux regulator (18 ; 28) also applied to an input of the corresponding adder circuit (14 ; 24) and a subtracter circuit (17 ; 27) which subtracts, from the signal from the circuits (32) comprising a corrector network and a linearizer, the signal from the corresponding flux calculation circuit (16 ; 26) and delivers an output signal to the input of the corresponding flux regulator circuit (18 ; 28).

14. Active magnetic bearing comprising two active magnetic bearing systems according to any one of Claims 1 to 13, oriented along two mutually perpendicular directions XX', YY'.

EP 0 749 538 B1

$i_0 \sin wt$

$i_0 \sin wt$

18    13    121    12    221    23    28

17    14    L1    11    L2    24    27

$u_1$    $u_2$

16    15    122    222    25    26

$e_1 = e_0 + x$    1    $e_2 = e_0 - x$

**FIG.1**

$u_1$  +  −  $u_2$

41    u

42    w

w    43

44

Signal de position détectée

31    Signal de position de référence

32

**FIG.2**

$f(x/e_0)$

0.5

−0.5    0.5    $x/e_0$

−0.5